# EUROPEAN PATENT SPECIFICATION

(11) **EP 1 317 154 B1**
(45) Date of publication and mention of the grant of the patent: **02.02.2005**
(21) Application number: 02356237.4
(22) Date of filing: 21.11.2002
(51) Int. Cl.: H04Q 7/22

(54) **Method for viewing geolocated images linked to a context**
Verfahren zur optischen Anzeige von mit einem Kontext verbundenen geolokalisierten Bildern
Procédé de visualisation d'images géolocalisées liées à un contexte

(30) Priority: 30.11.2001 FR 0115475
(43) Date of publication of application: 04.06.2003
(73) Proprietor: EASTMAN KODAK COMPANY, Rochester, New York 14650 (US)
(72) Inventor: Robinson, Guy, Kodak Limited, Harrow, Middlesex HA1 4TY (GB); Furon, Olivier Alain Christian c/o Kodak Industrie, 71102 Chalon sur Saone Cédex (FR)
(74) Representative: Weber, Etienne Nicolas

(56) References cited:
- EP-A- 1 024 347
- WO-A-01/37518
- WO-A-98/56197

## Description

The present invention is in the technical field of digital imaging. The present invention relates to a method for viewing the images of a geographic location on a portable terminal, said images each representing a specific context selected by a user.

Telemessaging services enable the reception, on request, of information on portable terminals or personal digital assistants (PDA); these interactive services are widely disclosed and exploited. The objective of these services is to supply information in real time to a user having a personal assistant. For example this information relates to geolocation data (interactive city maps), meteorological data, etc. This data is revised or updated periodically. One example of a method and system automatically supplying these types of services is described in U.S. Patent 6,202,023. U.S. Patent 6,202,023 describes a method and a system for, in a mobile environment (wireless network), for example by using the internet, automatically supplying to the users of portable terminals, geolocated information that is revised and specific to a given zone or geographic location. For example a user formulates a request from the portable terminal - the request is based on the interrogations, choices or preferences of the user, related to their needs. These needs can be for example knowing if a hotel located in a place near the user is full or not, or knowing what the weather conditions are in a given location where the user is heading, etc. The system analyzes the user's needs and reproduces, on the display screen of the portable terminal, texts and/or graphics (e.g. geographic maps) corresponding to the request data.

WO 9856197 international patent application discloses a method and a system, in a cellular radio communication system, adapted to provide a short message service (SMS), and in response to receipt of SMS messages, to selectively display stored graphic images and to selectively superpose stored geographically related information symbols on a displayed image. Thus, a relative amount of information can be transmitted on a single narrow-band channel.

EP 1,024,347 patent application discloses a method and a device for navigation, preferably for use in a vehicle. As the vehicle approaches a given location, a visual image of the location is displayed on the graphical image of a map on a portable terminal. The visual image is typically a photograph of the location that is displayed in a pop-up window on the display screen of the terminal.

WO 0137518 international patent application discloses a method and a data provision apparatus used preferably in an open global mobile Internet infrastructure. Data that a user of, for instance, a mobile telephone is interest in chases the user, rather than the user looking for the data. The data are provided in the form of an alert to the user on his mobile telephone.

The present invention relates to a method that enables a user, having a portable terminal comprising a display screen, to display still or moving digital images; said displayed images being linked to a time context selected by the user. These images come for example from photographs of a geographic location, and they are linked to a context of said place. An essential characteristic of the invention is to enable the supply of images of which each is a function of a user's preferred context. The content of the images takes into account the contextual parameters selected by the user, so as to display contextual digital data of these images, for example images of a geographic location, on the display screen of the portable terminal.

The present invention relates more particularly to a method for supplying at least one digital image of a geographic location, on a portable terminal having a display screen and keyboard, said method comprising the following steps:
a) providing a geolocation information representing the geographic position of said terminal ;
b) selecting by using the keyboard of said terminal at least one contextual parameter from among a list of contextual parameters which can be viewed on said terminal, one of the at least one selected parameter being linked to an event having taken place in the geographic location in a time context, such as dates or seasons;
c) from the portable terminal, transferring the at least one selected contextual parameter and geolocation information of the geographic location to a server;
d) automatically linking, in the server, the at least one contextual parameter and the geolocation information;
e) automatically selecting at least one image, said image being selected from the combination of the geolocation information and the selected parameter ;
f) automatically sending to the portable terminal, the at least one selected digital image ;
g) displaying on the screen of the portable terminal, one of the at least one digital image sent in step f).

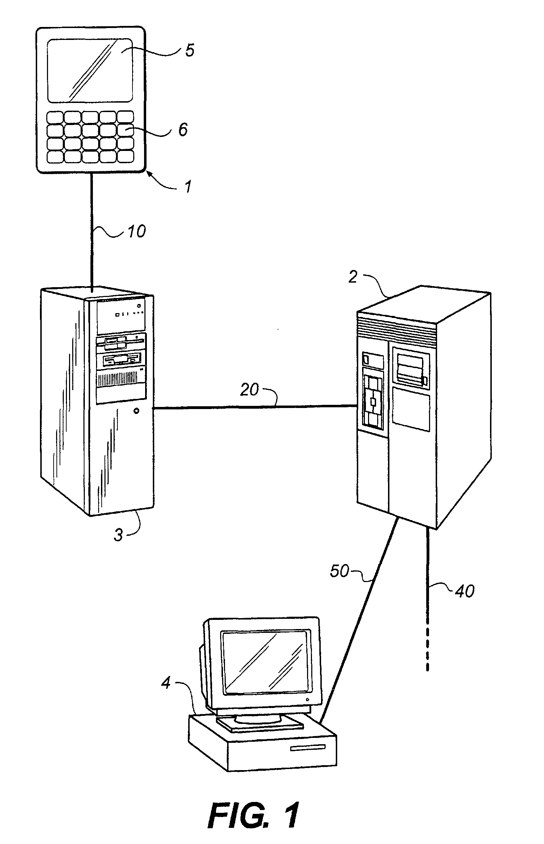

The characteristics of the invention will appear on reading the following description, with reference to the drawing of Figure 1.

Figure 1 diagrammatically represents a hardware environment used to implement the invention method. A portable terminal 1 having a display screen 5 is linked to a first server 2, via a gateway 3 of the WAP type (Wireless Application Protocol); this gateway 3 is intended to enable the communication of digital data, through the links 10, 20 between the portable terminal 1 and the network, for example GSM (Global System for Mobile) or GPRS (General Packet Radio System). A high-rate link 50 enables the communication of digital data between the first server 2 and a second server 4. The second server 4 contains for example indexed digital images in an image database. The link 40 enables the connection with a network such as for example the internet. Information or digital data can thus be recovered from Uniform Resource Locators (URLs) in the internet, which is done for example to enhance the image database. The portable terminal 1 is for example a digital camera, a cell phone, or a PDA. This portable terminal 1 enables either the recording and viewing of still or moving digital images (short video clips), or only the viewing of said images on the screen 5. The portable terminal is in addition provided with means enabling it to be geolocated. In other words the portable terminal 1 has for example a wireless modem or a GPS type system (Global Positioning System) that enables the provision at any moment and in any location of the geographic position (latitude, longitude) of said portable terminal. This position is given by the geographical coordinates of the location.

The method of the invention is implemented by the user of the portable terminal 1, wishing to display on screen 5 of the portable terminal 1, an image representing a given geographic location, in a particular factual context that said user has selected from the keyboard 6 of their portable terminal. The method of the invention uses on the one hand image information or digital data and on the other hand contextual information or digital data. All this information or digital data is processed by an algorithm that enables the execution of the various steps of the method of the invention. The image digital data correspond for example to photographs recorded in various geographic locations. The contextual digital data are the parameters linked to a context and selected by the user: in the rest of the description, they are called contextual parameters. The contextual parameters, corresponding to the user's preferences, are linked to an event (time activity) having taken place in a given location. The events are linked for example to cultural, sports, tourist activities, etc. The digital images and the contextual parameters are generic or specific. They are called "generic" if their production does not depend on the user; they are called "specific" if their production depends on, or is proper to the user. Examples illustrate these definitions in the later description of the embodiments of the invention. The algorithm used in the method of the invention enables, according to the contextual preferences selected by the user from the portable terminal, the automatic linking of the two types of digital data, i.e. the images on the one hand and the contextual parameters on the other hand, to supply the contextual data of an image thus representing, at a given moment, the automatic linking of a given geographic location with a context selected by the user.

One preferred embodiment of the method of the invention consists, from the portable terminal 1, in selecting one or more contextual parameters. These contextual parameters are saved in a database of a server, for example in the first server 2, or in the second server 4. The contextual parameters, from a request made on the keyboard 6 of the terminal 1, can be viewed and selected on said terminal 1. The contextual parameters appear in the form of digital displays mentioning for example geographic locations, a town name, or a famous place in said town; the contextual parameters also mention dates, for example in years (1920, 2000), or seasons (summer, winter); the contextual parameters also mention historic (e.g. a century change), cultural, artistic, sports, tourist events, etc. The above-mentioned contextual parameters are generic. But the user may also want to view an image of a given geographic location, depending on specific contextual parameters, i.e. proper to said user.

The user recovers for example an image that they, or even another person, saved previously, in the selected geographic location. In this case, the user selects, from the terminal 1, the name of the person having previously saved the image. This selection is done for example from an identification proper to said person. Thus the user selects one or more contextual parameters they wish to link with a geographic location.

The user may for example wish to display on the screen 5 of their portable terminal 1, one or more images of the location where they are. These images correspond to a representation of the location in a selected time context, and corresponding to a representation of said location in the past and in a specific context. From the selection, by the user of at least one contextual parameter linked to said location where they are, the method of the invention enables, after validation on the keyboard 6, the transfer of the selected contextual parameter(s) and the geolocation information to a first server 2. The geolocation information determines, for example by the latitude and longitude coordinates, the geographic location where the user is. This is done to enable the later reproduction of the contextual digital data of the image on the terminal 1. The geolocation information and the contextual parameter(s) are transferred to the server 2, 4 and saved in said server. If the user is physically at the location where they started the method of the invention, the geolocation information is automatically transferred to the server, as defined in Claim 6. The method of the invention then enables the automatic linking of the at least one selected preferred contextual parameter with the geolocation information, then the automatic selection in an image database, of at least one image of the geographic location corresponding to the context selected by the user, and finally the automatic sending and displaying of said image on the screen 5 of the terminal 1. The user may desire for example to view on their portable terminal 1, an image of the location where they are in winter, in the year 1920. They may also wish, if they are for example close to the Eiffel Tower, to want to view an image of the location where they are at the moment of the change of the millennium, etc. The images comprising contextual digital data are saved in an image database. This image database is stored in a server. The image database can be a personal database produced by the user over time, and stored for example in an image server 4. Metadata is linked to each image of said database. Metadata is information linked to each image, information not appearing in the image, but contained and consultable in the header of the digital file of said image. The metadata are for example the author of the photo, the time and date of its production, the geolocation coordinates of the image location, etc. These metadata work together with the automatic linking operated by the method of the invention, based on the selected contextual parameters. The image database can also be for example a generic database of an internet server, accessible by the link 40. The method of the invention thus enables a vast choice to be obtained for the possible links between the selected contextual parameters and the available images corresponding to the said contextual parameters.

According to a second embodiment of the method of the invention, the user, having their portable terminal 1, may wish to display on the screen 5 of said terminal, one or more images of a location where they are not physically present. In this case, the user must know and transmit manually the geolocation information, i.e. the coordinates of the location (latitude, longitude) that they wish to view, by using the keyboard 6. To do this, the user can for example retrieve from the server 4, on the screen 5 of the terminal 1, any image whatever of the location they wish to view, and they will recover for example the geolocation coordinates included in the metadata of said image.

According to a first alternative of the previous embodiments, as defined in Claim 2, the method of the invention enables the automatic saving of the selected image, just after said selection. The user executes a request from the keyboard 6, to display the selected and saved image. The image is saved for example in the first server 2.

A second alternative of the previous embodiments enables the automatic display on the screen 5 of the portable terminal 1 of the selected image(s), immediately after sending it to said terminal 1. This embodiment is defined in Claim 3.

In all the previously described embodiments, several selected images are displayed successively if, during the step of linking the contextual parameter and the geographic location, there are several images in the image database that can be selected in relation to the contextual parameter(s) selected by the user. In this case of displaying several images, said images are preferably displayed automatically and successively, according to display timing. This display timing can be adjusted from the keyboard 6 of the terminal 1. The display timing is for example 10 seconds per image. But images can also be displayed manually, from the display of the first image, the user themself operating the display of each of the following images manually from the keyboard 6.

## Claims

1. A method for supplying at least one digital image of a geographic location, on a portable terminal (1) having a display screen (5) and a keyboard (6), said method comprising the following steps:
a) providing a geolocation information representing the geographic position of said terminal (1);
b) selecting by using the keyboard (6) of said terminal (1) at least one contextual parameter from along list of contextual parameters which can be viewed on said_terminal (1), one of at least one selected parameter being linked to an event having taken place in the geographic location in a time context, such as dates or seasons;
c) from the portable terminal (1), transferring the at least one selected contextual parameter and geolocation information of the geographic location to a server (2), (4);
d) automatically linking, in the server (2), (4), the at least one contextual parameter and the geolocation information;
e) automatically selecting at least one digital image, said at least one digital image being selected from the combination of the geolocation information and the selected parameter;
f) automatically sending to the portable terminal (1), the at least one selected digital image;
g) displaying on the screen (5) of the portable terminal (1), one of the at least one digital image sent in step f).

2. The method of Claim 1, in which the image selected in step e) of Claim 1 is automatically saved in the server (2), (4) before sending it to the portable terminal (1), said sending being operated based on a request executed from said portable terminal (1).

3. The method of Claim 1, in which the display on the screen (5) of the portable terminal (1) is automatically operated, immediately after the sending operated in step f) of Claim 1.

4. The method as in any preceding claim, in which the successive display of several selected images is operated automatically according to adjustable display timing.

5. The method as in any preceding claim, in which the successive display of several selected images on the screen (5) of the terminal (1) is operated image by image, from the keyboard (6) of said terminal (1).

6. The method as in any preceding claim, in which the geolocation information is automatically transmitted to the server (2), (4).

7. The method as in any preceding claim, in which the digital image selected in step e) of Claim 1 is automatically displayed on the screen (5) of the terminal (1).

## Patentansprüche

1. Verfahren zum Erzeugen mindestens eines digitalen Bildes eines geografischen Ortes auf einem tragbaren Terminal (1) mit einem Bildschirm (5) und einer Tastatur (6), mit den folgenden Schritten:
a) Bereitstellen von geografischen Ortsinformationen, welche die geografische Position des Terminals (1) wiedergeben;
b) Auswählen unter Verwendung der Tastatur (6) des Terminals (1) mindestens eines kontextabhängigen Parameters aus einer Liste von kontextabhängigen Parametern, die auf dem Terminal (1) betrachtbar sind und von denen mindestens ein ausgewählter Parameter mit einem Ereignis in Verbindung steht, das in einem Zeitkontext wie beispielsweise einem Datum oder einer Jahreszeit an dem geografischen Ort stattgefunden hat;
c) vom tragbaren Terminal (1) aus Übertragen des mindestens einen ausgewählten kontextabhängigen Parameters und der geografischen Ortsinformationen zu einem Server (2), (4);
d) automatisches Verknüpfen des mindestens einen kontextabhängigen Parameters und der geografischen Ortsinformationen im Server (2), (4);
e) automatisches Auswählen mindestens eines digitalen Bildes, das aus der Kombination der geografischen Ortsinformationen und des ausgewählten Parameters auswählbar ist;
f) automatisches Senden des mindestens einen ausgewählten digitalen Bildes zum tragbaren Terminal (1); und
g) Darstellen des bei Schritt f) gesandten mindestens einen digitalen Bildes auf dem Bildschirm (5) des tragbaren Terminals (1).

2. Verfahren nach Anspruch 1, bei dem das in Schritt e) ausgewählte Bild automatisch im Server (2), (4) gespeichert wird, ehe es zum tragbaren Terminal (1) gesandt wird, wobei das Senden auf der Grundlage einer Anfrage erfolgt, die vom tragbaren Terminal (1) aus ausgeführt wird.

3. Verfahren nach Anspruch 1, bei dem das Darstellen auf dem Bildschirm (5) des tragbaren Terminals (1) automatisch erfolgt, sofort nach dem Senden gemäß Schritt f) nach Anspruch 1.

4. Verfahren nach einem der vorhergehenden Ansprüche, bei dem das aufeinanderfolgende Darstellen verschiedener ausgewählter Bilder automatisch geschieht gemäß einer einstellbaren Darstellzeit.

5. Verfahren nach einem der vorhergehenden Ansprüche, bei dem das aufeinanderfolgende Darstellen verschiedener ausgewählter Bilder auf dem Bildschirm (5) des Terminals (1) Bild für Bild von der Tastatur (6) des Terminals (1) aus erfolgt.

6. Verfahren nach einem der vorhergehenden Ansprüche, bei dem die geografischen Ortsinformationen automatisch zum Server (2), (4) übertragen werden.

7. Verfahren nach einem der vorhergehenden Ansprüche, bei dem das in Schritt e) gemäß Anspruch 1 ausgewählte digitale Bild auf dem Bildschirm (5) des Terminals (1) automatisch dargestellt wird.

## Revendications

1. Procédé pour fournir au moins une image numérique d'un lieu géographique, sur un terminal portable (1) muni d'un écran d'affichage (5) et d'un clavier (6), ledit procédé comprenant les étapes suivantes :
a) fournir une information de géolocalisation représentant la position géographique dudit terminal (1) ;
b) sélectionner, au moyen du clavier (6) dudit terminal (1), au moins un paramètre contextuel dans une liste de paramètres contextuels qui peuvent être visualisés sur ledit terminal (1), l'un de ces au moins un paramètre sélectionné étant lié à un événement ayant eu lieu dans le lieu géographique dans un contexte temporel, tel qu'une date ou une saison ;
c) à partir du terminal portable (1), transférer le au moins un paramètre contextuel sélectionné et l'information de géolocalisation du lieu géographique dans un serveur (2), (4) ;
d) associer automatiquement, dans le serveur (2), (4), le au moins un paramètre contextuel et l'information de géolocalisation ;
e) sélectionner automatiquement au moins une image numérique, ladite au moins une image numérique étant sélectionnée à partir de la combinaison de l'information de géolocalisation et du paramètre sélectionné ;
f) envoyer automatiquement au terminal portable (1) la au moins une image numérique sélectionnée ;
g) afficher sur l'écran (5) du terminal portable (1), l'une des au moins une image numérique envoyée à l'étape f).

2. Procédé selon la revendication 1, dans lequel l'image sélectionnée à l'étape e) de la revendication 1 est mémorisée automatiquement dans le serveur (2), (4) avant l'envoi vers le terminal portable (1), ledit envoi étant opéré à partir d'une requête exécutée à partir dudit terminal portable (1).

3. Procédé selon la revendication 1, dans lequel l'affichage sur l'écran (5) du terminal portable (1) est opéré automatiquement, immédiatement après l'envoi opéré à l'étape f) de la revendication 1.

4. Procédé selon l'une quelconque des revendications précédentes, dans lequel l'affichage successif de plusieurs images sélectionnées est opéré automatiquement suivant une temporisation d'affichage réglable.

5. Procédé selon l'une quelconque des revendications précédentes, dans lequel l'affichage successif de plusieurs images sélectionnées sur l'écran (5) du terminal (I) est opéré image par image, à partir du clavier (6) dudit terminal (1).

6. Procédé selon l'une quelconque des revendications précédentes, dans lequel l'information de géolocalisation est transmise automatiquement au serveur (2), (4).

7. Procédé selon l'une quelconque des revendications précédentes, dans lequel l'image numérique sélectionnée lors de l'étape e) de la revendication 1 est affichée automatiquement sur l'écran (5) du terminal (1).
